# EUROPÄISCHE PATENTSCHRIFT

(11) **EP 3 462 877 B1**
(45) Veröffentlichungstag und Bekanntmachung des Hinweises auf die Patenterteilung: **18.11.2020**
(21) Anmeldenummer: 17723137.0
(22) Anmeldetag: 17.05.2017
(51) Int. Cl.: A01N 53/00, A01N 25/04, A01N 25/22, A01N 25/10, A01P 7/04

(54) **FORMULIERUNGEN ENTHALTEND FLÜCHTIGE INSEKTIZIDE MIT VERBESSERTER LANGZEITSTABILITÄT UND WIRKUNG**
FORMULATIONS COMPRISING VOLATILE INSECTICIDES WITH IMPROVED LONG-TERM STABILITY AND ACTIVITY
FORMULATIONS COMPRENANT DES INSECTICIDES VOLATILES AVEC UNE STABILITÉ À LONG TERME ET UNE ACTIVITÉ AMÉLIORÉE

(30) Priorität: 24.05.2016 EP 16170950
(43) Veröffentlichungstag der Anmeldung: 10.04.2019
(73) Patentinhaber: Bayer CropScience Aktiengesellschaft, 40789 Monheim am Rhein (DE)
(72) Erfinder: KIJLSTRA, Johan, 51519 Odenthal (DE); SCHÜLE, Stephan, 40723 Hilden (DE)
(74) Vertreter: BIP Patents
(86) Internationale Anmeldenummer: PCT/EP2017/061825
(87) Internationale Veröffentlichungsnummer: WO 2017/202663

(56) Entgegenhaltungen:
- WO-A1-92/03048
- WO-A1-2012/003060
- WO-A2-2009/141109
- DE-A1- 2 357 826
- SAENGER W: "CYCLODEXTRIN INCLUSION COMPOUNDS IN RESEARCH AND INDUSTRY", ANGEWANDTE CHEMIE INTERNATIONAL EDITION, WILEY - V C H VERLAG GMBH & CO. KGAA, DE, Bd. 19, 1. Januar 1980 (1980-01-01), Seiten 344-362, XP001121152, ISSN: 1433-7851, DOI: 10.1002/ANIE.198003441
- SZEJTLI J: "CYCLODEXTRINS IN PESTICIDES", STARCH: INTERNATIONAL JOURNAL FOR THE INVESTIGATION, PROCESSING AND USE OF CARBOHYDRATES AND THEIR DERIVATIVES, WILEY-VCH VERLAG, WEINHEIM, DE, Bd. 37, Nr. 11, 1. Januar 1985 (1985-01-01), Seiten 382-386, XP002576818, ISSN: 0038-9056
- RITA DE CÁSSIA BERGAMASCO ET AL: "Sulfluramid Volatility Reduction by [beta]-Cyclodextrin", JOURNAL OF AGRICULTURAL AND FOOD CHEMISTRY, Bd. 53, Nr. 4, 1. Februar 2005 (2005-02-01), Seiten 1139-1143, XP055280266, US ISSN: 0021-8561, DOI: 10.1021/jf0486747
- LAJOS SZENTE ET AL: "FORMULATION OF INSECT CONTROLLING AGENTS WITH B-CYCLODEXTRIN", PESTICIDE SCIENCE, ELSEVIER APPLIED SCIENCE PUBLISHER. BARKING, GB, Bd. 28, Nr. 1, 1. Januar 1990 (1990-01-01) , Seiten 7-16, XP000133136, ISSN: 0031-613X
- DATABASE WPI Week 198419 Thomson Scientific, London, GB; AN 1984-116602 XP002758731, -& JP S59 53401 A (HOKKO CHEM IND CO LTD) 28. März 1984 (1984-03-28)

## Beschreibung

Die vorliegende Erfindung betrifft wässrige Zusammensetzungen mit flüchtigen Insektiziden, die eine verbesserte Langzeitstabilität aufweisen und daher auch über längere Zeit biologisch aktiv sind. Ein weiterer Gegenstand der Erfindung betrifft die Verwendung solcher Formulierungen zur lang anhaltenden Bekämpfung tierischer Schädlinge (Arthropoden) auf verschiedenen Oberflächen.

Die Bekämpfung von Arthropoden innerhalb und außerhalb von Gebäuden und Häusern ist aus verschiedenen Gründen notwendig. In Ländern, in denen Krankheiten von Arthropoden wie Insekten oder Spinnentieren auf Tiere und Menschen übertragen werden, z.B. Malaria, besteht ein starker Bedarf, die Bewohner wirksam und langfristig zu schützen. Darüber hinaus soll aus hygienischen und bautechnischen Gründen verhindert werden, dass tierische Schädlinge in Gebäude eindringen, sich in Gebäuden ausbreiten und aufhalten sowie Holz oder andere Materialien befallen. Aus diesem Grund wurde bereits eine Vielzahl von Bekämpfungsmitteln und -verfahren entwickelt. Die häufigste Bekämpfungsmethode ist das Ausbringen von insektiziden Wirkstoffen in wässrigen Spritz- oder Sprühlösungen.

Einige der eingesetzten Insektizide, wie beispielsweise einige Wirkstoffe aus der Klasse der Pyrethroide, weisen den Nachteil auf, dass sie auf Grund chemisch-physikalischer Parameter die Tendenz haben, aus einer Formulierung relativ schnell zu entweichen, was dem Ziel des Erreichens einer langanhaltenden biologischen Wirksamkeit der Formulierung auf einer besprühten Oberfläche entsprechend entgegenwirkt.

Unabhängig von dem verwendeten Wirkstoff ist die Wirksamkeit des Sprühbelags dabei auch stark abhängig von den chemisch-physikalischen Eigenschaften der besprühten Oberfläche. Die Wirkungsdauer des Sprühbelags wird besonders auf porösen und insbesondere alkalischen, porösen Oberflächen stark beeinträchtigt und verringert. Dies führt z.B. bei der Bekämpfung von Malariamücken innerhalb von Gebäuden zu kurzen Dauerwirkungen.

Bei der Schädlingsbekämpfung im Außenbereich des Hauses werden die Hauswände, der Erdboden, Pflanzen, Sträucher und Rasenflächen behandelt. Hier führt neben den Oberflächeneigenschaften (Porosität, pH-Wert) zusätzlich der Temperatur-, UV- und Regeneinfluss dazu, dass die eingesetzten Wirkstoffe ihre Wirksamkeit schnell verlieren.

Im Stand der Technik sind diverse Publikationen bekannt, die Zusammensetzungen mit flüchtigen Insektiziden behandeln. WO 2009/141109 A2 betrifft Zusammensetzungen zur Schädlingsbekämpfung, insbesondere insektizide Suspensionskonzentrate und aus ihnen hergestellte Sprühlösungen und die Verwendung solcher Formulierungen zur langanhaltenden Bekämpfung tierischer Schädlinge (Arthropoden) auf verschiedenen Oberflächen. Weiterhin offenbart WO 2009/141109 A2 die Verwendung bestimmter Polymerdispersionen in Schädlingsbekämpfungsmitteln, insbesondere ihre Verwendung zur Verlängerung der Langzeitwirkung dieser Mittel, wenn sie auf Oberflächen aufgebracht werden. WO 2009/141109 A2 offenbart speziell eine Zusammensetzung enthaltend ein Pyrethroid-Insektizid, eine Polymerdispersion und Wasser. Das Pyrethroid-lnsektizid ist Deltamethrin (Vp 0.0000124 mP @ 25°C) oder p-Cyfluthrin (Vp 0.000014 mPa @ 20°C) (Beispiele A-F).

WO 2012/003060 A1 betrifft Zusammensetzungen zur Schädlingsbekämpfung, durch Behandlung von Oberflächen mit solchen Formulierungen zur anhaltenden witterungsbeständigen Schädlingsbekämpfung, wobei die Zusammensetzung ein Pestizid und eine wässrige Polymerdispersion enthält. Insbesondere offenbart WO 2012/003060 A1 eine Zusammensetzung enthaltend Deltamethrin, eine Polymerdispersion und Wasser, wobei WO 2012/003060 A1 auf die Erhöhung der Regenfestigkeit gegenüber einer Zusammensetzung ohne Polymerdispersion abzielt.

SAENGER konnte zeigen, dass Cyclodextrine zum Binden von leicht flüchtigen Substanzen eingesetzt werden können (Saenger, W. (1980), Cyclodextrin Inclusion Compounds in Research and Industry. Angew. Chem. Int. Ed. Engl., 19: 344-362. DOI:10.1002/anie.198003441). Hierdurch werden sowohl Lagerung als auch Handhabung verbessert und durch die geringeren Verdampfungsverluste können auch geringere Mengen an Substanz eingesetzt werden. Beschrieben sind Einschlusskomplexe von Allethrin, Resmethrin und Pyrethrinen in β-Cyclodextrin, wobei gezeigt wurde, dass sowohl die Wirkstoffmenge gesenkt werden kann, als auch eine länger anhaltende Wirksamkeit im Vergleich zu einem nicht-komplexierten Wirkstoff beobachtet wird. Die Stabilität des Wirkstoffes ist durch die Komplexierung erhöht.

BERGAMASCO *et al.* untersuchten, dass die Volatilität des Wirkstoffes Sulfluramid durch Komplexierung mit p-Cyclodextrin vermindert werden kann (De Cassia Bergamasco, R. (2005), J. Agric. Food Chem., 53, 4, 1139-1143. DOI:10.1021/jf0486747). Die Freisetzung des Wirkstoffes aus dem Komplex erfolgt erst bei Temperaturen, die deutlich über dem Sublimationspunkt liegen.

SZENTE *et al.* konnten zeigen, dass flüchtige Insektizide mit (β-Cyclodextrin komplexiert werden können (Szente, L., Magisztrak, H. and Szejtli, J. (1990), Formulation of insect controlling agents with β-cyclodextrin. Pestic. Sci., 28: 7-16. DOI:10.1002/ps.2780280103). Die Komplexierung eines Wirkstoffes mit Cyclodextrin konnte auch zu einer verzögerten bzw. verlängerten Freisetzung führen. Spezifisch wurde die verminderte Verdampfung von flüchtigen Wirkstoffen an den Beispielen DEET, MGR-264, Malathion und Fenitrothion gezeigt. Die Wasserlöslichkeit, der mit Cyclodextrin komplexierten Wirkstoffe war gegenüber den nicht-komplexierten Wirkstoffen erhöht.

DE 2357826 A1 offenbart insektizide und akarizide Zusammensetzungen, umfassend eine Pestizidmenge einer wechselwirkenden Verbindung eines Pyrethroids mit einem Cyclodextrin und einem Verdünnungsmittel oder Träger und ein Verfahren zur Bekämpfung von Schädlingen unter Verwendung dieser Zusammensetzung. DE 2357826 A1 betrifft insbesondere Zusammensetzungen enthaltend Pyrethroide, welche durch Cyclodextrin stabilisiert sind. Es wurde gezeigt, dass eine verbesserte Lichtstabilität der Wirkstoffe bei gleichzeitig guter insektizider Wirksamkeit erzielt werden kann.

Es besteht andauernder Bedarf, die Wirksamkeit der Produkte unter diesen Bedingungen zu verbessern. Durch einen länger anhaltenden Schutz kann die Exposition des Anwenders, der Bewohner, der Haustiere und der Umwelt minimiert werden, weil weniger häufig Wirkstoff ausgebracht werden muss.

Die der vorliegenden Erfindung zugrunde liegende Aufgabe war daher die Bereitstellung neuer, verbesserter insektizider Zusammensetzungen, die lang anhaltenden Schutz vor Insekten bieten, wenn sie auf Oberflächen appliziert werden und bei kurzer Expositionszeit eine Verbesserung von Knock-down und Mortalität der Insekten aufweist. Die Zusammensetzungen sollen sich insbesondere im Zusammenhang mit der Verwendung von flüchtigen Insektiziden eignen. Zusätzlich ist wünschenswert, dass die erfindungsgemäßen Zusammensetzungen gegenüber verschiedenen Umwelteinflüssen wie hohe/tiefe/wechselnde Temperaturen, UV-Strahlung und Regen vorteilhafte Eigenschaften aufweisen.

Die Aufgabe(n) wird (werden) durch die erfindungsgemäßen wässrigen Zusammensetzungen enthaltend
- mindestens ein Insektizid, welches einen Dampfdruck von mindestens 0,001 mPa bei 20° C hat.
- mindestens ein Cyclodextrin und
- mindestens eine Polymerdispersion und
- Wasser,
wobei das Verhältnis der Gewichtsanteile von der mindestens einen Polymerdispersion zu dem mindestens einen Cyclodextrin jeweils bezogen auf den Feststoffgehalt zwischen 2:1 und 10:1 liegt und, wobei die mindestens eine Polymerdispersion erhältlich ist durch Polymerisation eines Monomerengemisches enthaltend eine oder mehrere Verbindungen ausgewählt aus Styrol, substituiertes Styrol, Acrylnitril, Methacrylnitril, Acrylsäureester und (Meth)acrylamide in Gegenwart eines Hydrokolloids als Pfropfgrundlage in Wasser, gelöst.

Erfindungsgemäße wässrige Zusammensetzungen sind einfach in der Handhabung und kostengünstig in der Herstellung. Erfindungsgemäße wässrige Zusammensetzungen können beispielsweise Fertigformulierungen (RTU = ready-to-use) aber auch Konzentrate (welche bei der Anwendung in Wasser verdünnt werden) sein.

Es wurde überraschend gefunden, dass die erfindungsgemäßen Zusammensetzungen nach dem Aufbringen auf eine Oberfläche eine verbesserte biologische Langzeitwirkung und bei kurzer Expositionszeit eine Verbesserung von Knock-down und Mortalität der Insekten im Vergleich zum Stand der Technik aufweisen. Dies gilt insbesondere bei der Behandlung von nicht-porösen Oberflächen. Weiterhin wurde überraschend gefunden, dass die Haltbarkeit der durch Anwendung der erfindungsgemäßen wässrigen Zusammensetzung auch unter dem Einfluss von hohen/tiefen/wechselnden Temperaturen, Regen und UV-Bestrahlung deutlich besser ist als die von vorbekannten Beschichtungen. Ein weiterer Vorteil der erfindungsgemäßen Zusammensetzungen ist eine hervorragende chemische Stabilität verbunden mit einer sehr guten Stabilisierung gegen Aufrahmung, Sedimentation und/oder Ausfällungen. So ist eine sachgemäße Anwendung ohne eine vorherige notwendige Homogenisierung der Formulierung beziehungsweise der Spritzbrühe erforderlich.

Die erfindungsgemäßen Zusammensetzungen sind sowohl für Innen- und Außenanwendungen geeignet, sind pflanzenverträglich und weisen ein vorteilhaftes Preis/Leistungs-Verhältnis auf.

Für die erfindungsgemäße wässrige Zusammensetzung wird vorzugsweise mindestens ein Insektizid ausgewählt aus der Gruppe von Esbiothrin, Lambda-Cyhalothrin, D-Allethrin, S-Bioallethrin, Prallethrin, Pyrethrum und einem Insektizid welches einen Polyfluorobenzyl Substituenten aufweist, verwendet. Noch bevorzugter wird ein Insektizid welches einen Polyfluorobenzyl-Substituenten aufweist, eingesetzt. Letztere sind bevorzugt ausgewählt aus der Gruppe von Transfluthrin, Metofluthrin, Momfluorothrin, Meperfluthrin, Dimefluthrin, Fenfluthrin, Profluthrin, Tefluthrin und Heptafluthrin. Ganz besonders bevorzugt ist die Verwendung von Transfluthrin.

Neben den oben aufgeführten Insektiziden können erfindungsgemäße Zusammensetzungen weitere insektizide Wirkstoffe enthalten.

Vorzugsweise enthält die beschriebene Formulierung zusätzlich mindestens einen Emulgator. Als Emulgatoren können ionische und nicht-ionische Emulgatoren oder deren Mischungen verwendet werden. Vorzugsweise werden für die wässrige Zusammensetzung der vorliegenden Erfindung nicht-ionische Emulgatoren aus der Gruppe bestehend aus ethoxylierten Pflanzenölen oder ethoxylierten Triglyceriden, Polyethylenoxid-polypropylenoxid-Blockcopolymeren, Polyethylenglykolethern von linearen und verzweigten Alkoholen, Umsetzungsprodukten von Fettsäuren mit Ethylenoxid und/oder Propylenoxid, Polyvinylalkoholen, Polyvinylpyrrolidonen, Mischpolymerisaten aus Polyvinylalkohol und Polyvinylpyrrolidon sowie Copolymerisaten aus (Meth)acrylsäure und (Meth)acrylsäureestern, eingesetzt.

Besonders bevorzugt wird für die wässrige Zusammensetzung als mindestens ein nicht-ionischer Emulgator ein ethoxyliertes Pflanzenöl oder ein ethoxyliertes Triglycerid eingesetzt. Ganz besonders bevorzugt wird erfindungsgemäß mindestens ein Rizinusölethoxylat eingesetzt. Vorzugsweise ist der Ethoxylierungsgrad zwischen 5 und 100, noch bevorzugter zwischen 10 und 50 und am bevorzugtesten zwischen 20 und 40.

Weiterhin bevorzugt werden für die wässrige Zusammensetzung der vorliegenden Erfindung auch ionische und zwitterionische Emulgatoren, als Ko-Emulgator in Kombination mit nicht-ionischen Emulgatoren, eingesetzt.

Ionische Emulgatoren können beispielweise aus der Gruppe der Alkylsulfosuccinate, Alkylsulfate, Alkylethersulfate, Alkylbenzenesulfonate, Sarcosinate, Naphthalensulfonate, Alkylcarboxylate,
Alkylethercarboxylate, Alkylphosphate, Alkyletherphosphate, Amphoacetate und Alkylisethionate ausgewählt werden.

Zwitterionische Emulgatoren können beispielweise aus der Gruppe der Aminoxide und Betaine ausgewählt werden.

Vorzugsweise enthält die beschriebene Formulierung zusätzlich mindestens ein nicht-flüchtiges Lösungsmittel. Nicht-flüchtige Lösungsmittel, die für die vorliegende Erfindung verwendbar sind, sind weitreichend und haben vorzugsweise einen Siedepunkt von mindestens 100° C bzw. vorzugsweise von mindestens 200° C und verfügen über eine geringe Löslichkeit in Wasser (unter 1 mol/l und vorzugsweise unter 0,1 mol/l). Besonders geeignete nicht-flüchtige Lösungsmittel zur Verwendung in der vorliegenden wässrigen Zusammensetzung beinhalten aromatische Kohlenwasserstoffe, wie beispielsweise Alkylbenzole oder Alkylnapthaline, aliphatische Lösungsmittel, Alkohole, N-Alkylpyrrolidone, Dimethylamide von Fettsäuren, pflanzliche und tierische Öle, Triglyceride und chlorierte Kohlenwasserstoffe. Bevorzugt werden erfindungsgemäß pflanzliche Öle, tierische Öle und/oder Triglyceride als Lösungsmittel eingesetzt. Der Begriff pflanzliche Öle, wie er hier verwendet wird, schließt Öle aus allen ölproduzierenden Pflanzen ein, wie Rapsöl, Sojaöl, Palmöl, Sonnenblumenöl, Baumwollöl, Maisöl, Leinöl, Kokosnußöl, Distelöl oder Rizinusöl. Der Ausdruck tierisches Öl, wie er hier verwendet wird, schließt Öle aus ölproduzierenden Tieren ein, wie Talgöl. Weitere Beispiele nichtflüchtiger Lösungsmittel sind die Umesterungsprodukte dieser Öle, wie Alkylester, beispielsweise Rapsölmethylester oder Rapsölethylester. Triglyceride können sowohl aus natürlichen Ölen gewonnen als auch synthetisch hergestellt werden. Bei der synthetischen Herstellung können fraktionierte Fettsäuren, gewonnen aus natürlichen Ölen, verwendet werden.

Erfindungsgemäß besonders bevorzugte nicht-flüchtige Lösungsmittel sind mittelkettige Fettsäureester, insbesondere Triglyceride mit C₄-C₂₂-Fettsäuren vorzugsweise C₆-C₁₄-Fettsäuren und noch bevorzugter mit C₈-C₁-Fettsäuren.

Erfindungsgemäß eingesetzte Cyclodextrine können beispielsweise ausgewählt werden aus der Gruppe von α-Cyclodextrinen, β-Cyclodextrinen, γ-Cyclodextrinen. Cyclodextrine sind cyclische Oligosaccharide. Sie stellen ringförmige Abbauprodukte von Stärke dar und sie bestehen aus α-1,4-glykosidisch verknüpften Glucosemolekülen (mit 6, 7 oder 8 Zuckereinheiten). Cyclodextrine können auch modifiziert vorliegen. So können alle primären oder sekundären Hydroxygruppen an den Zuckerresten z.B. alkyliert oder acetyliert sein. Methoden zur Modifizierung der Alkohole sind dem Fachmann bekannt und viele unterschiedliche Cyclodextrin Derivate sind im Handel erhältlich. Erfindungsgemäß bevorzugt sind β-Cyclodextrine und insbesondere solche β-Cyclodextrine, die an einem oder mehreren Hydroxygruppen am Cyclodextrin substituiert ist mit eine O-R oder O-C(O)-R Gruppe, wobei R ein optional substituiertes C₁₋₆ Alkyl, ein optional substituiertes C₂₋₆ Alkenyl, ein optional substituiertes C₂₋₆ Alkynyl, ein optional substituierte Aryl- oder Heteroarylgruppe ist. Vorzugsweise seht R für ein C₁₋₆ Alkyl und noch bevorzugter steht R für Methyl. Besonders bevorzugt ist demnach die Verwendung von Methyl-β-Cyclodextrine für die erfindungsgemäße wässrige Zusammensetzung.

Die wässrige Zusammensetzung der vorliegenden Erfindung enthält weiter mindestens eine Polymerdispersion. Die Polymerdispersion ist erhältlich durch Polymerisation eines Monomerengemisches enthaltend eine oder mehrere Verbindungen ausgewählt aus Styrol, substituiertes Styrol, Acrylnitril, Methacrylnitril, Acrylsäureester und (Meth)acrylamide in Gegenwart eines Hydrokolloids als Pfropfgrundlage in Wasser.

Bevorzugt sind Polymerdispersionen, die nach Eintrocknung eine Glastemperatur von 0°C bis 120°C, bevorzugt von 25°C bis 90°C und besonders bevorzugt von 40°C bis 80°C aufweisen.

Die Glastemperatur der Polymere wurde wie folgt bestimmt: Im DSC-Tiegel eingetrocknete Polymerdispersion (Trocknung 24 Stunden bei Raumtemperatur und 0% relativer Feuchte) wurde mit dem dynamischen Differenz-Kalorimeter DSC-7 mit Intracooler der Fa. Perkin-Elmer über drei Aufheiz/Kühl-Zyklen (-100°C bis +150°C, Heizrate 20K/min, Kühlrate 320K/min, Stickstoff-Spülung mit 30 ml/min Gasfluss) bestimmt. Die Auswertung der Glastemperatur erfolgt bei halber Höhe der Glasstufe. Die Mindestfilmbildetemperatur (MFT) wurde mit dem Temperaturgradienten-Prüfgerät Thermostair ® (Coesfeld Messtechnik GmbH) nach DIN ISO 2115 bestimmt.

Besonders bevorzugt sind Polymerdispersionen, die erhältlich sind durch Polymerisation eines Monomerengemisches enthaltend ein gegebenenfalls substituiertes Styrol und einen (Meth)acrylsäure-C₁-C₄-Alkylester.

Erhältlich sind solche gepfropften Polymerdispersionen z.B. durch radikalisch initiierte Emulsionscopolymerisation von ethylenisch ungesättigten Monomeren in Gegenwart von Stärke, dadurch gekennzeichnet, dass als ethylenisch ungesättigte Monomere
(a) 30 bis 60 Gew.-% mindestens eines gegebenenfalls substituierten Styrols,
(b) 60 bis 30 Gew.-% mindestens eines (Meth)acrylsäure-C₁-C₁₈-Alkylesters,
(c) 0 bis 10 Gew.-% an anderen ethylenisch ungesättigten copolymerisierbaren Monomeren, als Stärke (d) 10 bis 40 Gew.-% abgebaute Stärke mit einem Molgewicht Mₙ = 500 bis 10 000, wobei die Summe (a) + (b) + (c) + (d) 100% beträgt,
und als Radikalstarter für die radikalisch initiierte Emulsionspolymerisation ein pfropfaktives, wasserlösliches Redoxsystem eingesetzt wird.

Als substituierte Styrole werden bevorzugt α-Methylstyrol, Vinyltoluol oder deren Mischung eingesetzt. Besonders bevorzugt wird unsubstituiertes Styrol eingesetzt.

Zur Herstellung der Polymerdispersion werden als Monomere der Gruppe b) mindestens ein (Meth)acrylsäure-C₁-C₁₈-Alkylester vorzugsweise ein (Meth)acrylsäure-C₁-C₄-Alkylester eingesetzt. Bevorzugt werden Methacrylat, Methylmethacrylat, Ethylacrylat, Ethylmethacrylat, Propylacrylat, Propylmethacrylat, n-, iso- und tert.-Butylacrylat, n-, iso- und tert.-Butylmethacrylat, Hexylacrylat, Hexylmethacrylat, Ethylhexylacrylat, Stearylacrylat und Stearylmethacrylat eingesetzt. Besonders bevorzugt werden n-Butylacrylat oder binäre Gemische, welche zwischen 10 und 90 Gew.-% n-Butylacrylat enthalten, eingesetzt. Ganz besonders bevorzugt werden Gemische aus n-Butylacrylat und tert.-Butylacrylat eingesetzt.

Zur Herstellung der Polymerdispersion werden als Monomere der Gruppe c) mindestens ein von a) und b) verschiedenes, nichtionisches, ethylenisch ungesättigtes Monomer eingesetzt. Bevorzugt werden Nitrile wie beispielsweise Acrylnitril oder Methacrylnitril, Amide wie beispielsweise Acrylamid, Methacrylamid oder n-Methylolacrylamid, Vinylverbindungen wie beispielsweise Vinylacetat oder Vinylpropionat, Diene wie beispielsweise Butadien oder Isopren sowie Ester aus Acrylsäure bzw. Methacrylsäure und mindestens einer Ethylenoxideinheit wie beispielsweise Hydroxyethylmethacrylat oder Diethylenglykolmonomethacrylat eingesetzt.

Eine besonders bevorzugte Ausführungsform der Erfindung stellt der Einsatz von Polymerdispersionen, erhältlich durch Polymerisation eines Monomergemisches in Gegenwart eines Hydrokolloids als Pfropfgrundlage dar.

Hydrokolloide sind makromolekulare, hydrophile Substanzen, die in Wasser löslich oder dispergierbar und quellfähig sind und dabei viskose Lösungen, Gele oder stabilisierte Systeme bilden, wie beispielweise Agar, Carrageenan, Xanthan, Gellan, Galactomannane, Gummi Arabicum, Tragacanth, Karaya, Curdlan, beta Glucan, Alginate, Mannane, Chitosan, Cellulosen, Proteine, Gelatine, Pektine, Stärke, und deren modifizierten und/oder abgebauten (beispielweise hydrolysierten und/oder oxidierten) Formen sowie synthetische wasser-lösliche Polymere. Als Hydrokolloid bevorzugt wird Stärke, die während der Polymerisation oxidativ abgebaut wird.

Die gepfropften Polymerdispersionen weisen eine Teilchengröße von unter 100 nm, bevorzugt 50 bis 90 nm auf.

Neben den oben aufgeführten Komponenten enthalten die erfindungsgemäßen Zusammensetzungen gegebenenfalls
- einen Verdicker (ggf. inkl. Verdickungsaktivator),
- ein Konservierungsmittel,
- einen schaumhemmenden Stoff,
- eine oder mehrere Säuren oder Basen in einer Menge, um den pH-Wert der Mischung gezielt einzustellen oder Verdicker zu aktivieren sowie
- weitere Komponenten (wie z.B. ein Netzmittel) zur Optimierung der anwendungstechnischen Eigenschaften der Formulierung.

Als Verdicker kommen alle üblicherweise für diesen Zweck in agrochemischen Mitteln einsetzbaren Substanzen in Betracht, die als Verdickungsmittel fungieren. Bevorzugt sind anorganische Partikel, wie Carbonate, Silikate und Oxide, sowie auch organische Substanzen, wie Harnstoff-FormaldehydKondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum. Als Verdicker können weiterhin synthetische Verdicker wie Polyacrylatverdicker (z.B Carbopol®- und Pemulen®-Verdicker der Firma Lubrizol, Cleveland, USA), biologische Verdicker wie Polysaccharide (z.B. Kelzan® S, Xanthan Gum, oder weitere Hydrokolloide der Firma CP Kelco, Atlanta, USA) und anorganische Verdicker (z.B. Schichtsilikate wie Kaolin, Montmorillonit und Laoponit) eingesetzt werden.

Als Konservierungsmittel kommen alle für diesen Zweck in agrochemischen Mitteln dieses Typs einsetzbaren Substanzen in Frage. Als Beispiele genannt seien Preventol® (Lanxess AG) und Proxel® (Arch Chemival, Inc.).

Als schaumhemmende Stoffe kommen alle für diesen Zweck in agrochemischen Mitteln einsetzbaren Substanzen in Betracht. Bevorzugt sind Silikonöle und Magnesiumstearat.

Der Anteil des mindestens einen Insektizids in die erfindungsgemäßen wässrigen Zusammensetzungen kann in einem weiten Bereich variiert werden. Für eine RTU (Ready-to-use d.h. Spritzbrühen)-Anwendung z.B. zwischen 0,001 und 5 Gew.-%, bevorzugt zwischen 0,01 und 2,5 Gew.-%, besonders bevorzugt zwischen 0,05 und 1,0 Gew.-% und noch bevorzugter zwischen 0,05 und 0,5 Gew.-%.

Der Anteil des mindestens einen Cyclodextrins in der erfindungsgemäßen wässrigen Zusammensetzungen liegt beispielsweise für eine RTU-Anwendung z.B. zwischen 0,01 und 15 Gew.-%, bevorzugt zwischen 0,1 und 10 Gew.-%, besonders bevorzugt zwischen 0,5 und 5,0 Gew.-%.

Der Anteil der mindestens einen Polymerdispersion in der erfindungsgemäßen wässrigen Zusammensetzungen liegt für eine RTU-Anwendung z.B. zwischen 0,1 und 10 Gew.-%, bevorzugt zwischen 0,25 und 5,0 Gew.-%, besonders bevorzugt zwischen 0,5 und 2,5 Gew.-%. Die angegebenen Mengen geben dabei den Anteil bezogen auf den Feststoffgehalt an. Synthetisiert bzw. kommerziell angeboten und zur Herstellung der erfindungsgemäßen Zusammensetzungen eingesetzt werden die Polymere häufig als wässrige Dispersion.

Der Anteil an Wasser an der wässrigen Zusammensetzung in einer RTU-Formulierung liegt z.B. zwischen 70 und 99,89 Gew.-%, bevorzugt zwischen 90 und 98 Gew.-%.

Der optionale (und in einer bevorzugten Variante vorhandene) Anteil des mindestens einen nicht-ionischen Emulgators in der erfindungsgemäßen wässrigen Zusammensetzungen liegt beispielsweise für eine RTU-Anwendung z.B. zwischen 0,01 und 5 Gew.-%, bevorzugt zwischen 0,05 und 2,5 Gew.-%, besonders bevorzugt zwischen 0,1 und 1 Gew.-% und noch bevorzugter zwischen 0,1 und 0,5 Gew.-%.

Der optionale (und in einer bevorzugten Variante vorhandene) Anteil des mindestens einen nicht-flüchtigen Lösungsmittels in der erfindungsgemäßen wässrigen Zusammensetzungen liegt beispielsweise für eine RTU-Anwendung z.B. zwischen 0,001 und 1 Gew.-%, bevorzugt zwischen 0,005 und 0,5 Gew.-%, besonders bevorzugt zwischen 0,01 und 0,1 Gew.-%.

Alle sich auf die wässrige Zusammensetzung beziehenden Gewichtsprozentangaben der oben beschriebenen Komponenten ergeben in Summe höchstens 100%.

Die Anteile in der erfindungsgemäßen wässrigen Zusammensetzungen für ein Konzentrat sollten sich nach den Angaben für eine RTU-Formulierung, unter Berücksichtigung der Verdünnungsrate zur Herstellung der Spritzbrühe, richten. Der Anteil des mindestens einen Insektizids in der erfindungsgemäßen wässrigen Zusammensetzungen als Konzentrat kann in einem weiten Bereich nach Wunsch variiert werden z.B. zwischen 1 und 10 Gew.-%, bevorzugt zwischen 2,0 und 5,0 Gew.-%.

Der Anteil des mindestens einen Cyclodextrins in der erfindungsgemäßen wässrigen Zusammensetzungen liegt beispielsweise für ein Konzentrat z.B. zwischen 5,0 und 50 Gew.-%, bevorzugt zwischen 10 und 45 Gew.-%, besonders bevorzugt zwischen 20 und 40 Gew.-%.

Der Anteil der mindestens einen Polymerdispersion in der erfindungsgemäßen wässrigen Zusammensetzungen liegt für ein Konzentrat z.B. zwischen 5,0 und 30 Gew.-%, bevorzugt zwischen 8,0 und 25 Gew.-%, besonders bevorzugt zwischen 10 und 20 Gew.-%. Die angegebenen Mengen geben dabei den Anteil bezogen auf den Feststoffgehalt an. Synthetisiert bzw. kommerziell angeboten und zur Herstellung der erfindungsgemäßen Zusammensetzungen eingesetzt werden die Polymere häufig als wässrige Dispersion.

Der Anteil an Wasser als an der wässrigen Zusammensetzung in einem Konzentrat liegt z.B. zwischen 0 und 89 Gew.-% bevorzugt zwischen 0 und 50 Gew.-%.

Der optionale (und in einer bevorzugten Variante vorhandene) Anteil des mindestens einen Emulgators in der erfindungsgemäßen wässrigen Zusammensetzungen liegt beispielsweise für eine Konzentrat z.B. zwischen 0, 1 und 20 Gew.-%, bevorzugt zwischen 1,0 und 15 Gew.-%, besonders bevorzugt zwischen 2,0 und 10 Gew.-% und noch bevorzugter zwischen 3,0 und 8,0 Gew.-%.

Der optionale (und in einer bevorzugten Variante vorhandene) Anteil des mindestens einen nicht-flüchtigen Lösungsmittels in der erfindungsgemäßen wässrigen Zusammensetzungen liegt beispielsweise für ein Konzentrat z.B. zwischen 0,05 und 10 Gew.-%, bevorzugt zwischen 0,5 und 7,5 Gew.-%, besonders bevorzugt zwischen 1,0 und 5,0 Gew.-%.

Alle sich auf die wässrige Zusammensetzung beziehenden Gewichtsprozentangaben der oben beschriebenen Komponenten ergeben in Summe höchstens 100%.

Eine besonders bevorzugte Ausführungsform der Erfindung bezieht sich auf die oben beschriebenen erfindungsgemäße Zusammensetzung, wobei das Verhältnis der Gewichtsanteile von dem mindestens einen Insektizids zu dem mindestens einen Cyclodextrin zwischen 0,01: 1 und 1:1, vorzugsweise zwischen 0,05:1 und 0,5:1 liegt. Die angegebenen Mengen geben dabei den Anteil bezogen auf den Feststoffgehalt an.

Die Herstellung erfindungsgemäßer wässriger Zusammensetzung erfolgt in der Weise, dass man die Komponenten in den jeweils gewünschten Verhältnissen miteinander vermischt. Die Reihenfolge, in der die Bestandteile miteinander vermengt werden, ist beliebig, allerdings wird vorzugsweise das mindestens eine Insektizid mit mindestens einem nicht-ionischen Emulgator und mit mindestens einem nicht-flüchtigen Lösungsmittel vorab zu einem Emulsionskonzentrat vermischt bevor die anderen Bestandteile dazu gegeben werden.

Die erfindungsgemäßen Formulierungen können mit gutem Erfolg zur Abtötung von schädlichen oder lästigen Arthropoden, insbesondere Spinnentieren und Insekten, verwendet werden.

Zu den Spinnentieren gehören Milben (z.B. Sarcoptes scabiei, Dermatophagoides pteronyssinus, Dermatophagoides farinae, Dermanyssus gallinae, Acarus siro) und Zecken (z.B. Ixodes ricinus, Ixodes scapularis, Argas reflexus, Ornithodorus moubata, Rhipicephalus (Boophilus) microplus, Amblyomma hebraeum, Rhipicephalus sanguineus).

Zu den saugenden Insekten gehören im wesentlichen die Stechmücken (z.B. Aedes aegypti, Aedes vexans, Culex quinquefasciatus, Culex tarsalis, Anopheles albimanus, Anopheles stephensi, Mansonia titillans), Schmetterlingsmücken (z.B. Phlebotomus papatasii), Gnitzen (z.B. Culicoides furens), Kriebelmücken (z.B. Simulium damnosum), Stechfliegen (z.B. Stomoxys calcitrans), Tsetse-Fliegen (z.B. Glossina morsitans morsitans), Bremsen (z.B. Tabanus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloropyga, Hypoderma bovis, Hypoderma lineatum, Dermatobia hominis, Oestrus ovis, Gasterophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephalides canis, Ctenocephalides felis) und Sandflöhe (Tunga penetrans).

Zu den beißenden Insekten gehören im wesentlichen Schaben (z.B. Blattella germanica, Periplaneta americana, Blatta orientalis, Supella longipalpa), Käfer (z.B. Sitiophilus granarius, Tenebrio molitor, Dermestes lardarius, Stegobium paniceum, Anobium punctatum, Hylotrupes bajulus), Termiten (z.B. Reticulitermes lucifugus), Ameisen (z.B. Lasius niger, Monomorium pharaonis), Wespen (z.B. Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Bevorzugt werden die erfindungsgemäßen Materialien gegen Insekten, vor allem der Ordnungen Diptera und Dictyoptera eingesetzt.

Die wässrige Zusammensetzung kann auf jede übliche Art versprüht werden, z.B. durch handbetriebene oder elektrische Sprüher.

Der Wirkstoff wird dabei im Allgemeinen in einer Flächen-Konzentration von 1 bis 1000 mg/m² ausgebracht, bevorzugt in einer Konzentration von 1 bis 500 mg/m², besonders bevorzugt in einer Konzentration von 5 bis 250 mg/m² und ganz besonders bevorzugt in einer Konzentration von 10 bis 100 mg/m².

Die erfindungsgemäßen Zusammensetzungen können auf beliebige Oberfläche innerhalb von Gebäuden oder im Freien angewendet werden, z.B. Tapete, Beton, Putz, Mauerstein, Holz (behandelt und unbehandelt), Keramik (lasiert und unlasiert), Stroh bzw. Reet, Ziegel (roh, gekalkt, gestrichen), Tonmineralien (z.B. Terrakotta), kreidehaltige, kalkhaltige, gipshaltige, zementhaltige und lehmhaltige Oberflächen. Bevorzugt ist die Anwendung auf nicht-porösen Oberflächen, wie z.B. Kacheln.

### Herstellungsbeispiele

### Beispiel 1: Herstellung der Polymerdispersion

In einem Kolben mit Rührer, Rückflusskühler und Mantelheizung dispergiert man unter Stickstoff 124,5 g oxidativ abgebaute Kartoffelstärke in 985 g entionisiertem Wasser und löst durch Erwärmen. Nacheinander gibt man 42,7 g einer 1%-igen Eisen(II)sulfat-Lösung sowie 116 g einer 3%-igen Wasserstoffperoxid-Lösung zu und rührt 15 min bei 86°C. Nach 15 Minuten dosiert man gleichzeitig, aber getrennt mit konstanter Dosiergeschwindigkeit innerhalb 90 min bei 86°C die folgenden zwei Dosierlösungen zu:
1) 321 g einer Mischung aus Styrol, n-Butylacrylat und tert-Butylacrylat
2) 93,7 g einer 3%-igen Wasserstoffperoxid-Lösung.

Nach Beendigung der Dosierung rührt man weitere 15 min bei 86°C nach und gibt dann zur Nachaktivierung 2 g t-Butylhydroperoxid zu. Nach weiteren 60 min bei 86°C kühlt man auf Raumtemperatur ab, gibt 10 g einer 10%-igen Lösung von EDTA als Tetranatriumsalz zu und stellt mit 13 g einer 10%igen Natronlauge einen pH-Wert von 6,5 ein. Man filtriert über ein 100 µm Filtertuch und erhalt eine feinteilige Dispersion mit einem Feststoffgehalt von 24,0 Gew.-%.

Das Verhältnis von Styrol, n-Butylacrylat und tert-Butylacrylat kann je nach gewünschten Polymereigenschaften (Glastemperatur, Mindestfilmbildetemperatur) variiert werden. Das geeignete Verhältnis kann experimentell gemäß obiger Anleitung bestimmt werden.

Es wurde eine Polymerdispersion (nachfolgend bezeichnet als PD-SACP) gemäß oben angegebenem Herstellungsvorschrift hergestellt. Die Monomerzusammensetzung wurde dabei so eingestellt, dass das Polymer eine Glastemperatur zwischen 45 und 55°C und eine Mindestfilmbildetemperatur von 44°C aufwies. Der Trübungswert der auf 0,025 Gew.-% verdünnten Dispersion betrug E = 0,02 (535 nm, 1 cm Küvette). Als Verdünnungsmedium wurde demineralisiertes Wasser verwendet. Vergleichende Messungen mit einer 50 mM-Lösung von CaCl₂-Lösung führten jedoch zu identischen Extinktionswerten.

### Beispiel 2: Herstellung der erfindungsgemäßen Zusammensetzung

Verschiedene Sprühlösungen mit 0,1% Transfluthrin werden mit unterschiedlichen Konzentrationen vom Methyl-ß-Cyclodextrin und von der Polymerdispersion (PD-SACP), hergestellt gemäß oben angegebenem Herstellungsbeispiel, angesetzt.

Dazu wird der Wirkstoff Transfluthrin aufgeschmolzen und mit Miglyol 812 (ein Caprylic/Capric Triglyceride) und dem Emulgator Lucramol CO 30 (ein Fettsäurepolyethylenglykoletherester von Levaco Chemicals GmbH) zu einer Vorlösung homogen gemischt.

Das Methyl-ß-Cyclodextrin Cavasol W7M von Wacker und das Biozid Proxel GXL 20% von Arch werden dem demineralisierten Wasser zugesetzt und unter Rühren aufgelöst. Nach Auflösung werden die Polymerdispersion PD-SACP sowie die wirkstoffhaltige Vorlösung zu einer homogenen Dispersion eingerührt.

Die folgende Tabelle zeigt ein Beispiel der angesetzten Formulierungen:

| Komponente | Gew.-%, |
|---|---|
| TRANSFLUTHRIN | 0,10 |
| LUCRAMUL CO 30 | 0,165 |
| MIGLYOL 812 N | 0,066 |
| PROXEL GXL 20% | 0,10 |
| CAVASOL W7 M | 1,00 |
| PD-SACP | 4,00 |
| DEMINERALISED WATER | 94,57 |

Die Variation der Rezepturen bezieht sich auf die Variation der Konzentration in % von Cavasol W7M und PD-SCAP, die Wasserkomponente wird zum Ausgleich zu 100% varriert. Die Konzentration der weiteren Komponenten ist in jeder Formulierungsvariante konstant.

Folgende Varianten wurden zur biologischen Prüfung produziert:

| Formulierung | Gew.-%, PD-SACP | Gew.-%, Cavasol W7M |
|---|---|---|
| A | 0 | 0 |
| B | 2 | 0 |
| C | 0 | 6 |
| D | 4 | 3 |
| E | 4 | 0 |
| F | 0 | 1 |
| G | 0 | 3 |
| H | 4 | 1 |
| I | 2 | 1 |
| J | 2 | 0,5 |

Erfindungsgemäße Zusammensetzungen H, I und J; Referenzformulierungen A, B, C, D, E, F und G

### Biologische Wirkung

Diese Lösungen wurden mit einer Aufwandmenge von 25 mg Transfluthrin pro m² mit einer Flachstrahldüse auf nicht-lasierte Kachel aufgesprüht. Die Ausbringrate für die Sprühlösungen betrug somit 50 ml/m².

Die behandelten Oberflächen wurden anschließend gelagert und nach 9 Wochen Lagerung getestet.

Dazu wurden *Aedis aegypti* Mücken in die Mitte der Kachel gegeben (20 Tiere pro Kachel) und mit einem mit Gaze versehenen Aluminiumring (Durchmesser 10,5cm) abgedeckt. Die Expositionszeit betrug entweder 5 oder 15 Minuten. Nach der Expositionszeit wurden die Mücken von der behandelten Oberfläche entfernt und die Knock-down-Wirkung (Insekten in Rückenlage) sowie die Mortalität (nach 24 Stunden) bestimmt.

Bei der Expositionszeit von 5 Minuten wurde die mittlere Knock-Down-Wirkung als Mittelwert nach 5 und 15 Minuten errechnet, bei der Expositionszeit von 15 Minuten die mittlere Knock-Down-Wirkung nach 15 und 30 Minuten.

Jeder Test bestand aus 3 Wiederholungen, aus denen der Mittelwert gebildet wurde.

Während der Lagerung der Kachel und der biologischen Prüfung betrug die Temperatur 25-26 °C mit einer Luftfeuchtigkeit von etwa 60% (± 10%).

Die Ergebnisse für die mittlere Knock-Down-Wirkung und die Mortalität zeigt Tabelle 1.

**Tabelle 1:**

| | **9 Wochen nach Applikation auf nicht-lasierte Kacheln (*Aedes aegypti*)** | | | |
|---|---|---|---|---|
| | **Expositionszeit 15 Minuten** | | **Expositionszeit 5 Minuten** | |
| **Formulierung** | **% Knock Down** | **% Mortalität** | **% Knock Down** | **% Mortalität** |
| A | 0 | 0 | 0 | 0 |
| B | 3 | 8 | 1 | 3 |
| C | 67 | 70 | 6 | 2 |
| D | 47 | 42 | 12 | 21 |
| E | 75 | 38 | 20 | 7 |
| F | 100 | 73 | 20 | 7 |
| G | 97 | 71 | 39 | 32 |
| H | 100 | 68 | 95 | 43 |
| I | 100 | 98 | 100 | 72 |

Es ist überraschend, dass durch die Kombination von ausgewählten Mengenverhältnissen von PD-SACP und Cavasol W7M in der Formulierung, die Langzeitwirkung deutlich verbessert werden kann. Weiterhin ist überraschend, dass diese Verbesserung in diesem Fall nur bei mittlerer Konzentration von Cavasol W7M auftritt. Ausgehend von Formulierung F, also einer Formulierung enthaltend das Pestizid und ein Cyclodextrin als Komplexierungsmittel, kann zudem bereits bei kurzer Expositionszeit von 5 Minuten eine Verbesserung von Knock-Down und Mortalität durch Zugabe von bereits wenigen Mengen an Polymerdispersion erzielt werden (siehe Formulierung H und I im Vergleich zu B).

Der gleiche Versuch wurde auch mit *Anopheles funestus* Mücken durchgeführt. Die Ergebnisse für die die Mortalität zeigt Tabelle 2 und Tabelle 3 zu verschiedenen Zeitpunkten.

**Tabelle 2**

| | **4 Wochen nach Applikation auf nicht-lasierte Kacheln (*Anopheles funestus*)** |
|---|---|
| | **Expositionszeit 15 Minuten** |
| **Formulierung** | **% Mortalität** |
| A | 15 |
| B | 60 |
| I | 82 |
| J | 90 |

**Tabelle 3**

| | **8 Wochen nach Applikation auf nicht-lasierte Kacheln (*Anopheles funestus*)** |
|---|---|
| | **Expositionszeit 30 Minuten** |
| **Formulierung** | **% Mortalität** |
| A | 37 |
| B | 47 |
| I | 83 |
| J | 77 |

Auch aus Tabelle 2 und 3 geht hervor, dass durch die Kombination von PD-SACP und Cavasol W7M in der Formulierung, die Langzeitwirkung deutlich verbessert werden kann.

## Patentansprüche

1. Eine Zusammensetzung enthaltend
- mindestens ein Insektizid, welches einen Dampfdruck von mindestens 0,001 mPa bei 20° C hat,
- mindestens ein Cyclodextrin,
- mindestens eine Polymerdispersion und
- Wasser,
wobei das Verhältnis der Gewichtsanteile von der mindestens einen Polymerdispersion zu dem mindestens einen Cyclodextrin jeweils bezogen auf den Feststoffgehalt zwischen 2:1 und 10:1 liegt und,
wobei die mindestens eine Polymerdispersion erhältlich ist durch Polymerisation eines Monomerengemisches enthaltend eine oder mehrere Verbindungen ausgewählt aus Styrol, substituiertes Styrol, Acrylnitril, Methacrylnitril, Acrylsäureester und (Meth)acrylamide in Gegenwart eines Hydrokolloids als Pfropfgrundlage in Wasser.

2. Zusammensetzung nach Anspruch 1, **dadurch gekennzeichnet, dass** das mindestens eine Insektizid ausgewählt ist aus der Gruppe von Esbiothrin, Lambda-Cyhalothrin, D-Allethrin, S-Bioallethrin, Prallethrin, Pyrethrum und einem Insektizid welches einen Polyfluorobenzyl Substituenten aufweist, vorzugsweise ist das mindestens eine Insektizid ausgewählt aus der Gruppe von Transfluthrin, Metofluthrin, Momfluorothrin, Meperfluthrin, Dimefluthrin, Fenfluthrin, Profluthrin, Tefluthrin und Heptafluthrin.

3. Zusammensetzung nach einem der vorherigen Ansprüche, **dadurch gekennzeichnet, dass** die Formulierung mindestens einen Emulgator und vorzugsweise mindestens einen nicht-ionischen Emulgator enthält.

4. Zusammensetzung nach Anspruch 3, **dadurch gekennzeichnet, dass** der mindestens eine nicht-ionische Emulgator, ausgewählt ist aus der Gruppe von ethoxylierten Pflanzenölen oder ethoxylierten Triglyceriden, Polyethylenoxid-polypropylenoxid-Blockcopolymeren, Polyethylenglykolethern von linearen und verzweigten Alkoholen, Umsetzungsprodukten von Fettsäuren mit Ethylenoxid und/oder Propylenoxid, Polyvinylalkoholen, Polyvinylpyrrolidonen, Mischpolymerisaten aus Polyvinylalkohol und Polyvinylpyrrolidon sowie Copolymerisaten aus (Meth)acrylsäure und (Meth)acrylsäureestern, vorzugsweise ist der mindestens eine nicht-ionische Emulgator ein Ricinusölethoxylat.

5. Zusammensetzung nach einem der vorherigen Ansprüche, **dadurch gekennzeichnet, dass** zusätzlich mindestens eine nicht-flüchtiges Lösungsmittel, vorzugsweise ein pflanzliches Öl, ein tierisches Öl und/oder ein Triglycerid vorhanden ist.

6. Zusammensetzung nach einem der vorherigen Ansprüche, **dadurch gekennzeichnet, dass** das mindestens eine Insektizid mit mindestens einem nicht-ionischen Emulgator und mit mindestens einem nicht-flüchtigen Lösungsmittel vorab zu einem Emulsionskonzentrat vermischt werden.

7. Zusammensetzung nach einem der vorherigen Ansprüche, **dadurch gekennzeichnet, dass** das mindestens eine Cyclodextrin ein Beta-Cyclodextrin ist.

8. Wässrige Zusammensetzung nach einem der vorherigen Ansprüche, **dadurch gekennzeichnet, dass** das mindestens eine Cyclodextrin ein Methyl Beta-Cyclodextrin ist.

9. Zusammensetzung nach einem der vorherigen Ansprüche, **dadurch gekennzeichnet, dass** die Polymerdispersion durch radikalisch initiierte Emulsionscopolymerisation von ethylenisch ungesättigten Monomeren in Gegenwart von Stärke und Wasser erhältlich ist, **dadurch gekennzeichnet, dass** als ethylenisch ungesättigte Monomere
(a) 30 bis 60 Gew.-% mindestens eines gegebenenfalls substituierten Styrols,
(b) 60 bis 30 Gew.-% mindestens eines (Meth)acrylsäure-C₁-C₄-Alkylesters,
(c) 0 bis 10 Gew.-% an anderen ethylenisch ungesättigten copolymerisierbaren Monomeren,
als Stärke (d) 10 bis 40 Gew.-% abgebaute Stärke mit einem Molgewicht Mₙ = 500 bis 10 000, wobei die Summe (a) + (b) + (c) + (d) 100% beträgt,
und als Radikalstarter für die radikalisch initiierte Emulsionspolymerisation ein pfropfaktives, wasserlösliches Redoxsystem eingesetzt wird.

10. Zusammensetzung nach einem der vorherigen Ansprüche wobei es sich bei der Zusammensetzung um ein Konzentrat handelt, **dadurch gekennzeichnet, dass**
- mindestens eine Insektizid mit einem Gewichtsanteil von zwischen 1 und 10 Gew.-%,
- mindestens eine Cyclodextrin mit einem Gewichtsanteil von zwischen 5 und 50 Gew.-%,
- mindestens einer Polymerdispersion mit einem Gewichtsanteil von zwischen 5 und 30 Gew.-%, wobei sich die angegebene Menge auf den Feststoffgehalt des Polymers bezieht und
- Wasser mit einem Gewichtsanteil von zwischen 0 und 89 Gew.-%.
vorliegt.

11. Spritzbrühe enthaltend eine Zusammensetzung nach einem der vorherigen Ansprüche, welche durch Verdünnung mit Wasser hergestellt wird, **dadurch gekennzeichnet, dass**
- mindestens eine Insektizid mit einem Gewichtsanteil von zwischen 0,001 und 5 Gew.-%,
- mindestens eine Cyclodextrin mit einem Gewichtsanteil von zwischen 0,01 und 15 Gew.-%,
- mindestens einer Polymerdispersion mit einem Gewichtsanteil von zwischen 0,1 und 10 Gew.-%, wobei sich die angegebene Menge auf den Feststoffgehalt des Polymers bezieht und
- Wasser mit einem Gewichtsanteil von zwischen 70 und 99,89 Gew.-%.
vorliegt.

12. Verwendung einer Zusammensetzung gemäß einem beliebigen der Ansprüche 1 bis 10 bzw. einer Spritzbrühe nach Anspruch 11 zur Schädlingsbekämpfung vorzugsweise zur Bekämpfung von Insekten und insbesondere von Stechmücken ausgenommen zur therapeutischen prophylaktischen Behandlung des tierischen oder menschlichen Körpers.

## Claims

1. Composition, comprising
- at least one insecticide which has a vapour pressure of at least 0.001 mPa at 20°C,
- at least one cyclodextrin,
- at least one polymer dispersion and
- water,
wherein the ratio of the proportions by weight of the at least one polymer dispersion to the at least one cyclodextrin is between 2:1 and 10:1, based on the solids content and,
wherein the at least one polymer dispersion is obtainable by polymerization in water of a monomer mixture comprising one or more compounds selected from styrene, substituted styrene, acrylonitrile, methacrylonitrile, acrylic esters and (meth)acrylamides in the presence of a hydrocolloid as grafting base.

2. Composition according to Claim 1, **characterized in that** the at least one insecticide is selected from the group comprising esbiothrin, lambda-cyhalothrin, D-allethrin, S-bioallethrin, prallethrin, pyrethrum and an insecticide which has a polyfluorobenzyl substituent, the at least one insecticide preferably being selected from the group comprising transfluthrin, metofluthrin, momfluorothrin, meperfluthrin, dimefluthrin, fenfluthrin, profluthrin, tefluthrin and heptafluthrin.

3. Composition according to either of the preceding claims, **characterized in that** the formulation comprises at least one emulsifier and preferably at least one non-ionic emulsifier.

4. Composition according to Claim 3, **characterized in that** the at least one non-ionic emulsifier is selected from the group comprising ethoxylated vegetable oils or ethoxylated triglycerides, polyethylene oxide-polypropylene oxide block copolymers, polyethylene glycol ethers of linear and branched alcohols, reaction products of fatty acids with ethylene oxide and/or propylene oxide, polyvinyl alcohols, polyvinylpyrrolidones, mixed polymers of polyvinyl alcohol and polyvinyl pyrrolidone, and copolymers of (meth)acrylic acid and (meth)acrylates, the at least one non-ionic emulsifier preferably being a castor oil ethoxylate.

5. Composition according to any of the preceding claims, **characterized in that** at least one non-volatile solvent, preferably a vegetable oil, an animal oil and/or a triglyceride, is additionally present.

6. Composition according to any of the preceding claims, **characterized in that** the at least one insecticide is first mixed with at least one non-ionic emulsifier and with at least one non-volatile solvent to give an emulsion concentrate.

7. Composition according to any of the preceding claims, **characterized in that** the at least one cyclodextrin is a beta-cyclodextrin.

8. Aqueous composition according to any of the preceding claims, **characterized in that** the at least one cyclodextrin is a methyl-beta-cyclodextrin.

9. Composition according to any of the preceding claims, **characterized in that** the polymer dispersion is obtainable by radical-initiated emulsion copolymerization of ethylenically unsaturated monomers in the presence of starch and water, **characterized in that** the ethylenically unsaturated monomers employed are
(a) 30 to 60% by weight of at least one optionally substituted styrene,
(b) 60 to 30% by weight of at least one C₁-C₄-alkyl (meth)acrylate,
(c) 0 to 10% by weight of other ethylenically unsaturated copolymerizable monomers,
the starch (d) employed is 10 to 40% by weight degraded starch with a molar weight Mₙ = 500 to 10 000, the total of (a) + (b) + (c) + (d) being 100%,
and the free-radical-initiator employed for the radical-initiated emulsion polymerization is a graft-active, water-soluble redox system.

10. Composition according to any of the preceding claims, which composition is a concentrate, **characterized in that** the following are present:
- at least one insecticide in a proportion by weight of between 1 and 10% by weight,
- at least one cyclodextrin in a proportion by weight of between 5 and 50% by weight,
- at least one polymer dispersion in a proportion by weight of between 5 and 30% by weight, where the stated amount is based on the solids content of the polymer, and
- water in a proportion by weight of between 0 and 89% by weight.

11. Spray mixture comprising a composition according to any of the preceding claims, which is prepared by dilution with water, **characterized in that** the following are present:
- at least one insecticide in a proportion by weight of between 0.001 and 5% by weight,
- at least one cyclodextrin in a proportion by weight of between 0.01 and 15% by weight,
- at least one polymer dispersion in a proportion by weight of between 0.1 and 10% by weight, where the stated amount is based on the solids content of the polymer and
- water in a proportion by weight of between 70 and 99.89% by weight.

12. Use of a composition according to any of Claims 1 to 10 of a spray mixture according to Claim 11 for controlling pests, preferably for controlling insects and particularly mosquitos, with the exception of the therapeutic prophylactic treatment of the animal or human body.

## Revendications

1. Composition contenant :
- au moins un insecticide, qui a une pression de vapeur d'au moins 0,001 mPa à 20 °C,
- au moins une cyclodextrine,
- au moins une dispersion de polymère et
- de l'eau,
le rapport entre les proportions en poids de l'au moins une dispersion de polymère et de l'au moins une cyclodextrine, à chaque fois par rapport à la teneur en solides, se situant entre 2:1 et 10:1 et,
l'au moins une dispersion de polymère pouvant être obtenue par polymérisation d'un mélange de monomères contenant un ou plusieurs composés choisis parmi le styrène, le styrène substitué, l'acrylonitrile, le méthacrylonitrile, les esters de l'acide acrylique et les (méth)acrylamides en présence d'un hydrocolloïde en tant que base de greffage dans de l'eau.

2. Composition selon la revendication 1, **caractérisée en ce que** l'au moins un insecticide est choisi dans le groupe de l'esbiothrine, la lambda-cyhalothrine, la D-alléthrine, la S-bioalléthrine, la pralléthrine, le pyrèthre et un insecticide qui présente un substituant polyfluorobenzyle, l'au moins un insecticide étant de préférence choisi dans le groupe de la transfluthrine, la métofluthrine, la momfluorothrine, la méperfluthrine, la diméfluthrine, la fenfluthrine, la profluthrine, la téfluthrine et l'heptafluthrine.

3. Composition selon l'une quelconque des revendications précédentes, **caractérisée en ce que** la formulation contient au moins un émulsifiant et de préférence au moins un émulsifiant non ionique.

4. Composition selon la revendication 3, **caractérisée en ce que** l'au moins un émulsifiant non ionique est choisi dans le groupe des huiles végétales éthoxylées et des triglycérides éthoxylés, des copolymères à blocs de type poly(oxyde d'éthylène)-poly(oxyde de propylène), des éthers de polyéthylèneglycol d'alcools linéaires et ramifiés, des produits de transformation d'acides gras avec de l'oxyde d'éthylène et/ou de l'oxyde de propylène, des poly(alcool vinylique), des polyvinylpyrrolidones, des polymérisats mixtes de poly(alcool vinylique) et de polyvinylpyrrolidone ainsi que des copolymérisats d'acide (méth)acrylique et d'esters d'acide (méth)acrylique, l'au moins un émulsifiant non ionique étant de préférence un éthoxylate d'huile de ricin.

5. Composition selon l'une quelconque des revendications précédentes, **caractérisée en ce qu'**au moins un solvant non volatil, de préférence une huile végétale, une huile animale et/ou un triglycéride, est de plus présent.

6. Composition selon l'une quelconque des revendications précédentes, **caractérisée en ce que** l'au moins un insecticide est mélangé auparavant avec au moins un émulsifiant non ionique et avec au moins un solvant non volatil pour donner un concentré d'émulsion.

7. Composition selon l'une quelconque des revendications précédentes, **caractérisée en ce que** l'au moins une cyclodextrine est une bêta-cyclodextrine.

8. Composition aqueuse selon l'une quelconque des revendications précédentes, **caractérisée en ce que** l'au moins une cyclodextrine est une méthyl-bêta-cyclodextrine.

9. Composition selon l'une quelconque des revendications précédentes, **caractérisée en ce que** la dispersion de polymère peut être obtenue par copolymérisation en émulsion initiée de manière radicalaire de monomères éthyléniquement insaturés en présence d'un amidon et d'eau, **caractérisée en ce qu'**en tant que monomères éthyléniquement insaturés,
(a) 30 à 60 % en poids d'au moins un styrène éventuellement substitué,
(b) 60 à 30 % en poids d'au moins un ester alkylique en C₁-C₄ d'acide (méth)acrylique,
(c) 0 à 10 % en poids d'autres monomères éthyléniquement insaturés copolymérisables,
en tant qu'amidon (d), 10 à 40 % en poids d'amidon décomposé ayant un poids moléculaire Mₙ = 500 à 10 000, la somme (a) + (b) + (c) + (d) valant 100 %,
et en tant qu'amorceur radicalaire pour la polymérisation en émulsion initiée de manière radicalaire, un système rédox soluble dans l'eau, actif pour le greffage, sont utilisés.

10. Composition selon l'une quelconque des revendications précédentes, la composition étant un concentré, **caractérisée en ce que**
- au moins un insecticide est présent en une proportion en poids comprise entre 1 et 10 % en poids,
- au moins une cyclodextrine est présente en une proportion en poids comprise entre 5 et 50 % en poids,
- au moins une dispersion de polymère est présente en une proportion en poids comprise entre 5 et 30 % en poids, la quantité indiquée se rapportant à la teneur en solides du polymère et
- de l'eau est présente en une proportion en poids comprise entre 0 et 89 % en poids.

11. Bouillie de pulvérisation contenant une composition selon l'une quelconque des revendications précédentes, qui est préparée par dilution avec de l'eau, **caractérisée en ce que**
- au moins un insecticide est présent en une proportion en poids comprise entre 0,001 et 5 % en poids,
- au moins une cyclodextrine est présente en une proportion en poids comprise entre 0,01 et 15 % en poids,
- au moins une dispersion de polymère est présente en une proportion en poids comprise entre 0,1 et 10 % en poids, la quantité indiquée se rapportant à la teneur en solides du polymère et
- de l'eau est présente en une proportion en poids comprise entre 70 et 99,89 % en poids.

12. Utilisation d'une composition selon l'une quelconque des revendications 1 à 10 ou d'une bouillie de pulvérisation selon la revendication 11 pour lutter contre des nuisibles, de préférence pour lutter contre des insectes et notamment contre des moustiques, à l'exception du traitement thérapeutique ou prophylactique du corps animal ou humain.
